# FASCICULE DE BREVET EUROPEEN

(11) **EP 3 008 764 B1**
(45) Date de publication et mention de la délivrance du brevet: **22.03.2017**
(21) Numéro de dépôt: 14731589.9
(22) Date de dépôt: 13.06.2014
(51) Int. Cl.: H01M 2/02, H01M 10/04, H01M 2/10, H01M 2/30, H01M 2/20, H01M 2/06, H01M 10/42, H01M 10/48

(54) **BATTERIE COMPOSEE D'UN ASSEMBLAGE EN CHAINE DE MODULES**
BATTERIE AUS EINER KETTENANORDNUNG VON MODULEN
BATTERY MADE UP OF A CHAIN ASSEMBLY OF MODULES

(30) Priorité: 13.06.2013 FR 1355500
(43) Date de publication de la demande: 20.04.2016
(73) Titulaire: Commissariat à l'Énergie Atomique et aux Énergies Alternatives, 75015 Paris (FR)
(72) Inventeur: DESPESSE, Ghislain, F-38340 Voreppe (FR)
(74) Mandataire: Novaimo
(86) Numéro de dépôt international: PCT/EP2014/062390
(87) Numéro de publication internationale: WO 2014/198900

(56) Documents cités:
- WO-A1-2007/100140
- US-A1- 2005 280 393
- US-A1- 2009 258 286

## Description

L'invention concerne un module d'un dispositif de transmission d'énergie, comme un module de batterie. Elle concerne aussi un dispositif de transmission d'énergie et une batterie en tant que tels comprenant plusieurs modules. Elle concerne aussi un procédé de montage d'une telle batterie ou dispositif de transmission d'énergie et un procédé de gestion d'une telle batterie ou dispositif de transmission d'énergie.

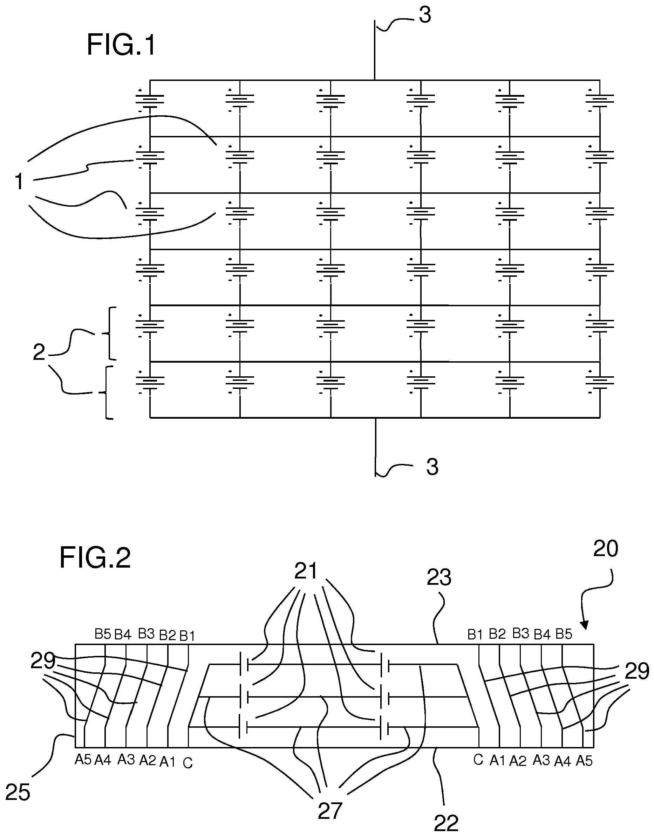

La figure 1 représente une batterie selon l'état de la technique, aussi appelée « pack batterie ». Un tel pack batterie, que nous appellerons simplement batterie par la suite, est composé d'une multitude de batteries élémentaires. Une batterie élémentaire, souvent appelée simplement cellule, comprend une partie active qui participe directement à la fonction de stockage et restitution d'énergie électrique, qui peut être par exemple être de nature chimique. Cette partie active est disposée dans un boîtier dont une première face externe forme la borne positive ou premier collecteur de courant de la cellule et une seconde face externe forme la borne négative ou second collecteur de courant. La batterie, représentée schématiquement sur la figure 1, comprend une architecture classique de plusieurs étages ou modules 2, disposés en série, et chaque module comprend plusieurs cellules 1 disposées en parallèle. Les deux modules disposés aux extrémités de l'assemblage forment chacun respectivement une borne 3 pour la liaison de la batterie avec l'extérieur, pour alimenter un dispositif extérieur par exemple ou pour la recharge de la batterie.

Selon une première réalisation de l'état de la technique, la réalisation pratique d'une telle batterie se fait en reliant électriquement les différents modules 2 par des fils électriques et des connecteurs, ou par des câbles électriques soudés ou vissés de modules en modules. Naturellement, une telle réalisation est complexe à fabriquer, peu fiable car la multiplication des liaisons électriques intermédiaires augmente le risque de défaillance, et est peu flexible puisque l'architecture de la batterie est difficilement modifiable lorsqu'elle est finalisée.

Selon une seconde réalisation amélioré de l'état de la technique, les modules de la batterie se présentent sous la forme de boîtiers indépendants, mécaniquement fixés et connectés électriquement entre eux de manière amovible par l'intermédiaire d'un bâti, aussi appelé rack. Dans leur position au sein du bâti, les boîtiers sont connectés les uns avec les autres par un bus de puissance agencé au sein du rack, et peuvent transmettre une tension à des bornes de sortie, de même agencées sur le rack. Naturellement, le rack est dimensionné initialement en fonction du nombre de modules maximum qu'une utilisation est susceptible d'exiger. Par la suite, même en cas de besoin inférieur, le rack conserve donc toujours le même encombrement. Cette solution conserve ainsi l'inconvénient de nécessiter un bâti d'encombrement important et invariable.

Le document WO2007100140 décrit un système avec des modules empilables ayant des inter-connections pour des liaisons électriques de puissance reliées aux cellules ainsi que des liaisons électriques pour lire les potentiels des modules.

Les constatations précédentes s'appliquent aussi plus généralement à un élément générateur d'électricité, appelé dispositif de transmission d'énergie, par exemple composé de cellules photovoltaïques ou de piles à combustible, qui peut présenter une architecture modulaire similaire à celle de la batterie décrite précédemment et se heurter aux mêmes problématiques techniques.

Ainsi, il existe un besoin d'une solution améliorée de stockage d'énergie (ou génération d'énergie) permettant de résoudre au moins une partie des inconvénients des solutions existantes, et l'invention cherche à atteindre tout ou partie des objets suivants.

Un premier objet de l'invention est de proposer une solution de fourniture d'énergie qui permet de garantir un fonctionnement fiable et allongé dans le temps.

Un second objet de l'invention est de proposer une solution de fourniture d'énergie qui s'adapte facilement à différentes exigences d'utilisation, est flexible et conviviale.

Un troisième objet de l'invention est de proposer une solution de fourniture d'énergie d'encombrement minimum.

A cet effet, l'invention repose sur un module de dispositif de transmission d'énergie comprenant au moins une cellule reliée à des connecteurs de cellule, permettant de connecter cette au moins une cellule avec des composants externes au module, caractérisé en ce qu'il comprend au moins une paire de liaisons électriques de puissance indépendante de la au moins une cellule, reliée à deux connecteurs du module, permettant le simple transport d'énergie au travers le module. Chacune de ces liaisons électriques de puissance indépendante est reliée à deux connecteurs du module dont un connecteur est disposé de sorte de se trouver en vis-à-vis d'un connecteur de cellule d'un autre module identique qui viendrait s'assembler avec ce module, en réalisant une connexion électrique entre ces deux connecteurs.

L'invention porte aussi sur un dispositif de transmission d'énergie, notamment batterie ou dispositif générateur d'énergie, caractérisé en ce qu'il comprend au moins deux modules tels que décrits précédemment connectés en chaîne les uns avec les autres, au moins un premier module étant connecté à un support d'accueil, qui reçoit la puissance transmise par tout ou partie des cellules des au moins deux modules, et comprend des connecteurs pour relier le dispositif de transmission d'énergie à un dispositif externe à alimenter.

Enfin, l'invention porte aussi sur un procédé de montage d'un dispositif de transmission d'énergie, notamment une batterie, caractérisé en ce qu'il comprend une étape de détermination du nombre de modules nécessaires en fonction d'une utilisation prédéterminée, puis la connexion des modules nécessaires entre eux sous la forme d'une chaîne de modules, et la connexion du premier module sur un support d'accueil.

L'invention est plus précisément définie par les revendications.

Ces objets, caractéristiques et avantages de la présente invention seront exposés en détail dans la description suivante de modes de réalisation particuliers faits à titre non-limitatif en relation avec les figures jointes parmi lesquelles :
La figure 1 représente schématiquement la structure d'une batterie selon un état de la technique.
La figure 2 représente schématiquement un module de batterie selon un mode de réalisation de l'invention.
La figure 3 représente schématiquement une batterie selon un premier mode de réalisation de l'invention.
La figure 4 représente schématiquement l'assemblage de deux modules d'une batterie selon un mode de réalisation de l'invention.
La figure 5 représente schématiquement une batterie selon une variante du premier mode de réalisation de l'invention.
La figure 6 représente schématiquement un module de batterie selon la variante du premier mode de réalisation de l'invention.
La figure 7 représente schématiquement une batterie selon un second mode de réalisation de l'invention.
La figure 8 représente schématiquement un module de batterie selon le second mode de réalisation de l'invention.
La figure 9 représente schématiquement une batterie comprenant des modules de formats différents selon une variante des modes de réalisation de l'invention.
La figure 10 représente schématiquement un support d'accueil d'une batterie selon un mode de réalisation de l'invention.
La figure 11 représente schématiquement un support d'accueil d'une batterie selon un autre mode de réalisation de l'invention.

Dans les figures suivantes, les mêmes références seront utilisées pour des éléments identiques ou similaires dans chaque mode de réalisation de l'invention, pour une raison de simplification de la description.

La figure 2 représente schématiquement un module 20 de batterie selon un mode de réalisation de l'invention. Ce module 20 se présente comme une entité physique monolithique, dissociable du reste de la batterie. Dans ce mode de réalisation, il présente une forme parallélépipédique. Il comprend une enveloppe 25 extérieure (ou boîtier), comprenant deux surfaces 22, 23, que nous qualifierons de surfaces inférieure 22 et surface supérieure 23 par convention en rapport avec l'utilisation par assemblage vertical d'un tel module, comme cela apparaîtra par la suite. Des connecteurs sont prévus, aménagés au niveau de l'enveloppe extérieure 25 du module, pour l'assemblage du module 20 avec d'autres composants pour former une batterie. A l'intérieur de l'enveloppe 25, le module 20 comprend des cellules 21, reliées entre elles par des liaisons électriques de cellules 27, selon une architecture série et/ou parallèle par exemple. Ces cellules 21 sont reliées à au moins deux connecteurs de cellule C, disposés au niveau de la surface inférieure 22 de l'enveloppe 25 dans ce mode de réalisation, qui ont pour fonction de permettre la liaison électrique des cellules 21 du module 20 avec les autres composants de la batterie. En remarque, le connecteur de cellule C à droite sur la figure est relié au potentiel bas du module 20 et celui à gauche sur la figure au potentiel haut, selon ce mode de réalisation. Cet ensemble des cellules 21, de leurs liaisons électriques de cellules 27 jusqu'aux connecteurs de cellules C forme la partie active du module 20.

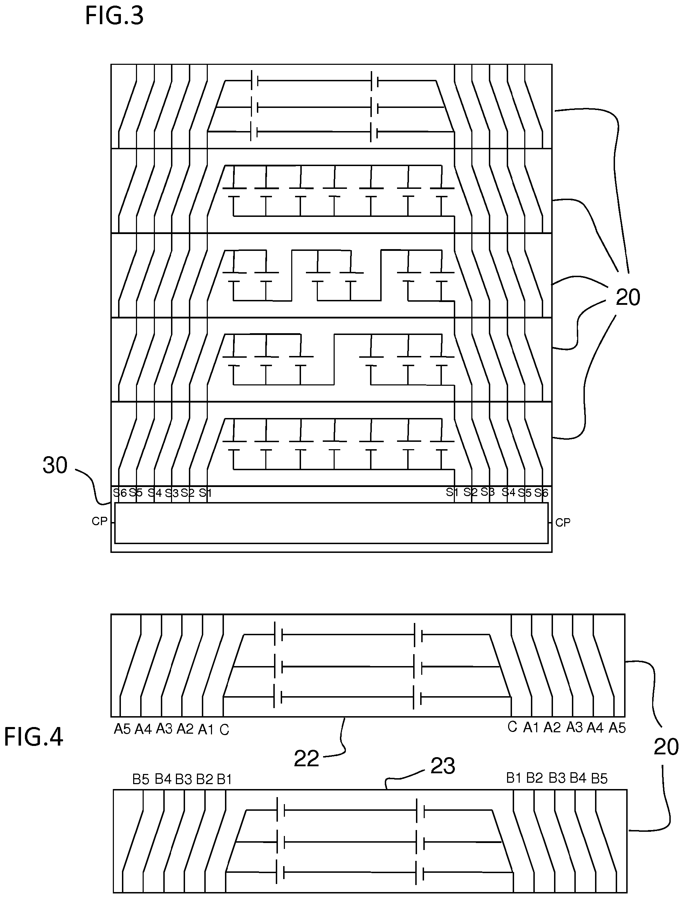

D'autre part, le module 20 comprend aussi des liaisons électriques 29 totalement indépendantes de la partie active, qui ont pour fonction la connexion électrique de la partie active d'autres modules d'une batterie, comme cela sera explicité par la suite en référence avec la figure 3. Le terme « indépendant » signifie donc que ces liaisons électriques 29 n'ont aucun lien physique avec les cellules 21 et leurs liaisons électriques de cellules 27, n'ont aucun point dont le potentiel, non nul, serait dépendant d'au moins une cellule 21 de ce module 20. Chaque liaison électrique 29 relie un premier connecteur Ai disposé au niveau de la surface inférieure 22 du module 20 à un connecteur Bi disposé au niveau de la surface supérieure 23 du module 20. Dans cette réalisation, le module 29 comprend cinq paires de liaisons électriques 29 réparties latéralement, de part et d'autre des cellules 21 et de leurs connecteurs de cellule C, et comprend ainsi cinq paires de connecteurs A1, A2, A3, A4, A5, qui se répartissent symétriquement de part et d'autre des deux connecteurs de cellule C, au niveau de la surface inférieure 22 de l'enveloppe 25, et cinq paires de connecteurs B1, B2, B3, B4, B5, disposées au niveau de la surface supérieure 23, respectivement reliées aux cinq paires de connecteurs A1, A2, A3, A4, A5 par des liaisons électriques 29 indépendantes.

La figure 3 représente un mode de réalisation d'une batterie 10, formée notamment à partir de plusieurs modules 20 similaires à celui décrit précédemment, et à l'aide d'un support d'accueil 30 qui sera détaillé par la suite. Dans cette réalisation, la batterie comprend cinq modules 20 assemblés verticalement en chaine les uns sur les autres, au-dessus du support d'accueil 30. En remarque, ces différents modules diffèrent par l'organisation de leurs cellules 21. Ils peuvent en effet comprendre des parties actives différentes.

Comme cela apparaît clairement sur les figures 3 et 4, la superposition de deux modules 20 forme une liaison électrique entre les connecteurs de la surface supérieure 23 du premier module positionné sous le second module avec les connecteurs de la surface inférieure 22 de ce second module. Cette liaison entre deux modules est plus particulièrement représentée sur la figure 4. Les connecteurs de cellule C du module supérieur viennent se connecter sur les premiers connecteurs B1 de la surface supérieure 23 du module inférieur, puis les connecteurs Ai du module supérieur viennent se connecter avec les connecteurs Bi₊₁ du module inférieur. En complément, la forme globale de chaque module favorise aussi leur liaison physique, voire mécanique, en complément des connexions électriques susmentionnées. En option, Il est possible d'envisager des éléments de guidage pour faciliter l'ajustement respectif des deux modules et la correspondance de leurs connecteurs destinés à coopérer.

Par ce biais, il apparait que les cellules 21 de n'importe quel module 20 donné de la batterie représentée sur la figure 3 sont finalement électriquement reliées au support d'accueil 30, par le biais des connecteurs de cellule C de leur module, puis par les liaisons électriques 29 indépendantes qui traversent tous les modules situés sous ce module donné. Les liaisons électriques 27, 29 des modules 20, mentionnées précédemment, sont donc des liaisons électriques adaptées pour la transmission de puissance de ou vers les cellules de la batterie, et nous les appellerons liaisons électriques de puissance. Elles peuvent par exemple être soumises à des courants de plusieurs Ampères, ou de plusieurs centaines d'Ampères. Leurs dimensions doivent notamment être adaptées au passage de ce courant, à savoir présenter une section de passage du courant suffisant pour qu'il n'y ait pas d'échauffement significatif par effet Joule. De plus, les liaisons électriques 29 indépendantes sont avantageusement suffisamment isolées entre elles et par rapport aux liaisons électriques 27 pour tenir des tensions de quelques dizaines de volts à plusieurs centaines de volts.

Dans ce mode de réalisation, les liaisons électriques 29 indépendantes d'un module sont sensiblement parallèles et inclinées pour permettre finalement de superposer leur connecteur inférieur Ai avec un connecteur supérieur Bi₊₁. Elles sont aussi symétriquement réparties autour d'un plan médian vertical, pour relier de manière similaire chacun des deux potentiels provenant des deux connecteurs de cellule C de chaque module. Avec une réalisation de modules comprenant cinq liaisons électriques 29 indépendantes, il apparaît qu'il est possible de construire une batterie avec au maximum six modules 20 superposés. Naturellement, le même principe peut être implémenté pour tout autre nombre de liaisons électriques 29 indépendantes et connecteurs Ai, Bi associés.

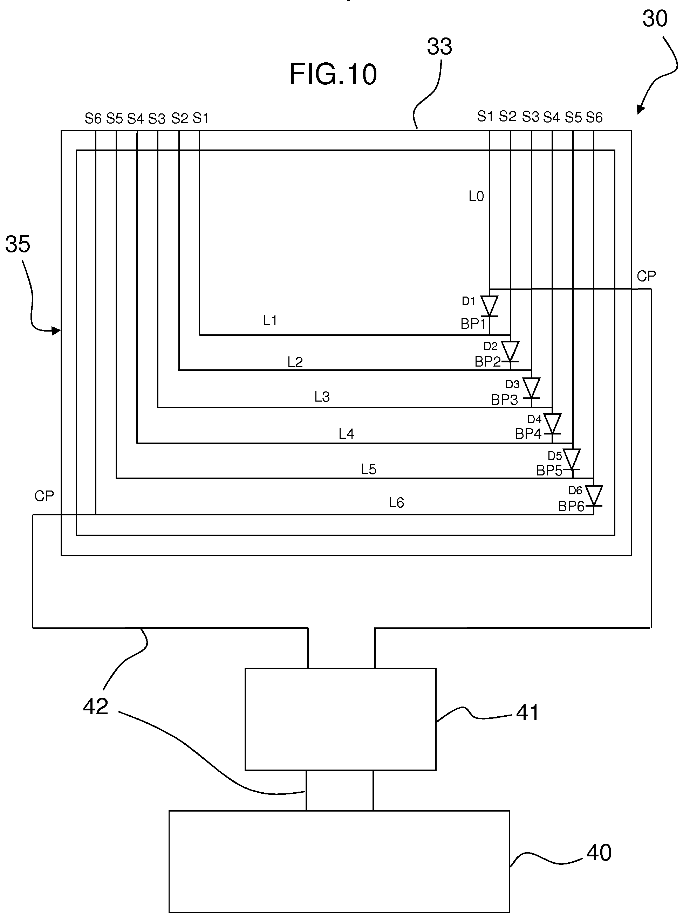

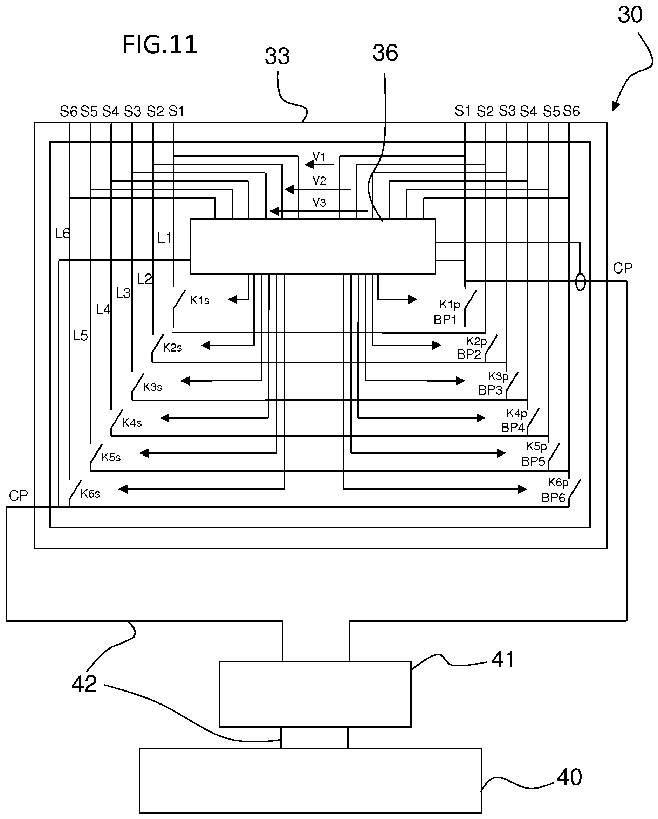

Le support d'accueil 30 de la batterie, qui supporte tout l'empilement vertical des modules dans ce mode de réalisation, se présente aussi sous la forme d'une entité physique indépendante, aussi de forme parallélépipédique dans ce mode de réalisation. Il comprend des paires de connecteurs de puissance Si sur sa surface supérieure 33, particulièrement représentées par les figures 10 et 11, qui sont connectés aux connecteurs C et Ai agencés sur la surface inférieure 22 du premier module 20 de la batterie. Par cette architecture, le support d'accueil 30 de la batterie est ainsi électriquement relié, directement ou indirectement, par ses paires de connecteurs de puissance Si, à toutes les parties actives de tous les modules de la batterie. Le support d'accueil 30 organise alors la liaison électrique des différents modules entre eux et la liaison électrique de la batterie avec l'extérieur, par l'intermédiaire de connecteurs CP, comme cela sera détaillé par la suite.

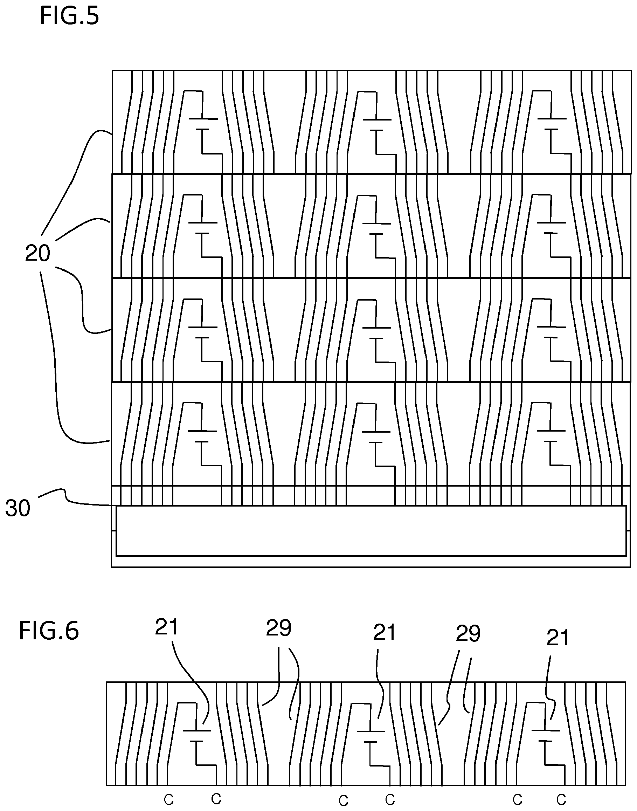

Ce principe peut être implémenté avec des modules 20 présentant une architecture interne différente, ainsi qu'une organisation différente de leurs connecteurs. La figure 5 représente ainsi une variante de réalisation dans laquelle chaque module 20, spécifiquement représenté par la figure 6, présente des cellules 21 indépendantes, reliées séparément à plusieurs couples de connecteurs de cellule Ci distincts. En variante, chaque cellule 21 représentée sur les figures 5 et 6 pourrait être remplacée par tout agencement de plusieurs cellules 21. Avec cette nouvelle architecture des cellules 21 au sein des modules, les liaisons électriques 29 indépendantes sont aussi réaménagées, réparties autour des cellules 21, et associées à une multitude de paires de connecteurs Ai, Bi, tels que représentés. Le principe reste identique, les liaisons électriques 29 de chaque module de la batterie sont reliées entre elles de sorte que les différentes cellules 21 de chaque module sont électriquement liées au support d'accueil 30. Dans cette réalisation, chaque module 20 comprend trois cellules 21. Dans un mode de réalisation, ces cellules peuvent être placées en série : toutefois, cette liaison en série passe par le support d'accueil 30, qui a ainsi accès aux potentiels intermédiaires entre ces cellules et peut mettre en oeuvre des fonctions de gestion intelligente, comme l'équilibrage de ces cellules. Dans un autre mode de réalisation, les trois cellules 21 sont utilisée indépendamment les unes des autres pour générer au niveau du support d'accueil trois tensions distinctes (pour générer par exemple trois phases pour former un système triphasé).

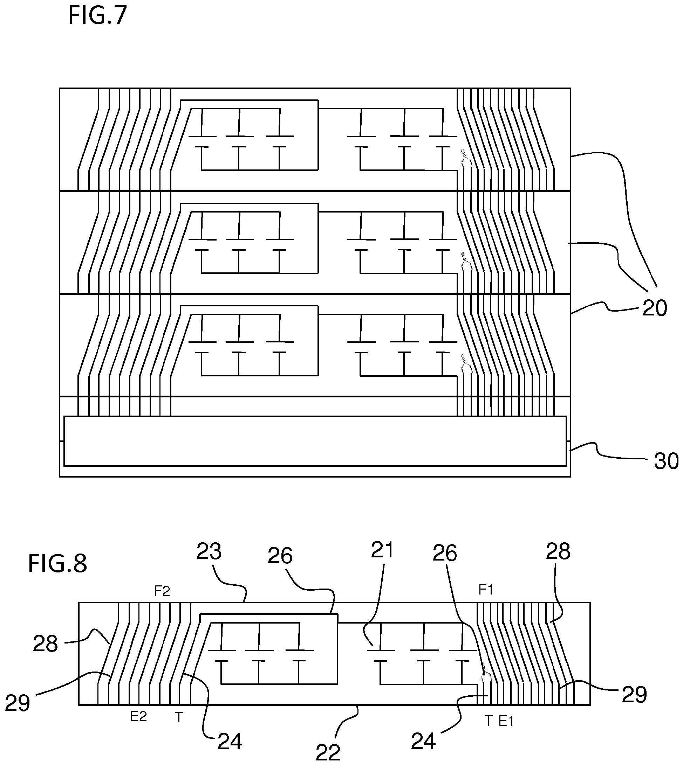

Les figures 7 et 8 représentent un second mode de réalisation de l'invention, dans lequel un module 20 intègre au moins un capteur et des liaisons de communication, en complément des liaisons électriques de puissance 27, 29 mentionnées dans le mode de réalisation précédent, pour la transmission d'information depuis ou vers ce au moins un capteur. Dans l'exemple représenté sur la figure 8, chaque module intègre un capteur 26 de température et un capteur 26 de mesure de tension reliés par une paire de premières liaisons de communication 24 jusqu'à des connecteurs de capteur T supplémentaires agencés dans la surface inférieure 22 d'un module. Des secondes liaisons de communication 28, indépendantes de ces premières liaisons de communication 24, traversent chaque module 20 entre des connecteurs de communication Ei et Fi respectivement agencés dans la surface inférieure 22 et la surface supérieure de chaque module 20, non tous représentés pour ne pas alourdir la figure. Comme cela apparaît sur les figures 7 et 8, ces secondes liaisons de communication 28 sont intercalées entre les secondes liaisons électriques 29 au niveau d'une partie latérale. Naturellement, d'autres capteurs et liaisons de communication associées pourraient être en variante ajoutés, comme des capteurs de mesure de tension, courant, etc. Enfin, ce module comprend aussi tous les éléments déjà explicités dans le mode de réalisation précédent.

La figure 7 représente la batterie obtenue par l'assemblage de trois modules 20 tels que décrits ci-dessus sur un support d'accueil 30. Comme cela apparaît, deux modules juxtaposés mettent en oeuvre une connexion électrique à la fois des liaisons électriques de puissance, comme mentionné précédemment, mais aussi de leurs connecteurs de communication, les connecteurs de communication Ei agencés au niveau de la surface inférieure d'un module venant en liaison avec les connecteurs de communication Fi₊₁ agencés au niveau de leur surface supérieure, et les connecteurs de capteur T venant en coopération avec le premier connecteur de communication F1. Dans cette réalisation, il apparaît que de manière semblable aux liaisons électriques de puissance, tous les capteurs de tous les modules sont liés par des liaisons de communication avec le support d'accueil 30, qui est aussi aménagé pour présenter les connexions supplémentaires coopérant avec tous les connecteurs de la face inférieure du premier module de la batterie.

Ainsi, l'architecture d'une telle batterie répond bien aux objets recherchés et atteint les avantages suivants :
- Il est possible de construire une structure modulaire flexible, en formant un assemblage de simples modules, sans recours à un bâti ;
- Un utilisateur peut se contenter du nombre de modules suffisant pour une utilisation particulière ;
- l'encombrement obtenu se limite donc aux modules réellement nécessaires ;
- si un utilisateur assemble par erreur plus de modules qu'il n'est possible de gérer par le support d'accueil, les derniers modules seront simplement non utilisés, cela n'entraînera aucun risque ou danger ;
- Il est possible de remplacer facilement un module défaillant, sans remettre en cause le reste des composants de la batterie ;
- dans les réalisations décrites, tous les modules peuvent être assemblés dans un ordre quelconque, par leur simple superposition.

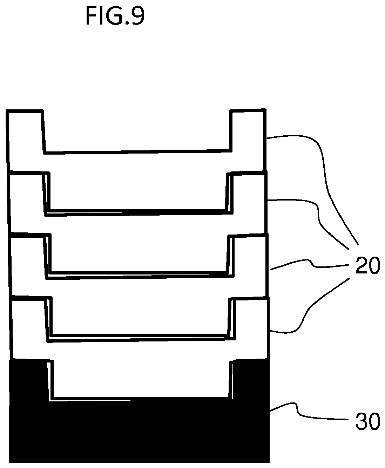

Tous les modules précédents peuvent subir de nombreuses modifications et variantes sans sortir du concept de l'invention. Notamment, les différents connecteurs peuvent prendre différentes formes et être agencés en différents endroits sur l'enveloppe 25 d'un module, non nécessairement limités aux surfaces supérieures et inférieures. D'ailleurs, ces modules peuvent aussi se présenter sous tout autre format, dès lors qu'il permet leur emboîtement comme décrit précédemment. A cet effet, la figure 9 représente schématiquement une variante de réalisation basée sur une forme différente des modules. En variante, les modules pourraient être assemblés dans une direction latérale, en plus ou en remplacement des empilements verticaux représentés. D'autre part, la partie active des modules peut être quelconque, comprendre toute organisation électrique et tout nombre de cellules. Le terme de module doit s'entendre au sens large, peut correspondre à tout sous-ensemble de batterie. En variante, il est aussi possible d'imaginer des assemblages de modules non obligatoirement tous identiques, mais pouvant aussi présenter des formats différents et/ou des structures internes différentes, dès lors que leur format reste compatible et permet leur assemblage mécanique et électrique.

La figure 10 illustre plus en détail l'architecture d'un support d'accueil 30, associé au premier mode de réalisation de la batterie, en rapport avec les figures 2 et 3. Toutefois, les mêmes principes peuvent être implémentés sur tout support d'accueil 30 adapté aux autres modes de réalisation décrits précédemment. Ce support d'accueil 30 se présente aussi sous la forme d'un boîtier 35 parallélépipédique, comprenant des connecteurs CP pour la connexion de la batterie avec un dispositif externe, agencés sur deux surfaces latérales opposées du boîtier dans l'exemple représenté. Dans cet exemple illustré, la batterie alimente ainsi un dispositif 40 par l'intermédiaire d'un convertisseur 41 DC/DC ou éventuellement DC/AC par des liaisons électriques 42. Ensuite, le support d'accueil 30 comprend des paires de connecteurs de puissance Si sur sa face supérieure 33, destinées à coopérer avec les connecteurs correspondants disposés au niveau de la surface inférieure 22 du module 20 directement superposé au support d'accueil, non représenté pour simplifier la représentation. Le support d'accueil 30 peut prendre toutes les formes, dès lors que son format sur sa partie supérieure, reste compatible et permet l'assemblage mécanique et électrique du premier module 20. Les autres faces du support d'accueil 30 peuvent notamment être à adaptées pour se fixer mécaniquement sur le dispositif que l'on cherche à électrifier : par exemple sur le cadre d'un scooter, sur le porte bagage d'un vélo, à l'intérieure d'un coffre de voiture, dans la cale d'un bateau...

Le support d'accueil 30 comprend de plus des liaisons électriques Lᵢ de puissance, reliant le connecteur de puissance Si de gauche avec un connecteur de puissance Si₊₁ de droite. Le dernier connecteur de gauche, S6 dans cet exemple, destiné à une liaison électrique avec le potentiel haut du module 20 le plus haut de la batterie, est directement relié à un des connecteurs CP, et le premier connecteur de droite, S1 dans cet exemple, destiné à une liaison électrique avec le potentiel bas du module 20 le plus bas de la batterie, est directement relié à l'autre connecteur CP. Ces liaisons électriques permettent ainsi de relier en série les différentes parties actives des différents modules de la batterie entre les deux connecteurs CP, pour former une architecture électrique finalement similaire à celle de la figure 1.

En remarque, le support d'accueil 30 gère aussi l'absence éventuelle d'un ou plusieurs module(s) 20, puisque leur nombre peut varier. Pour cela, des liaisons de bypass BPi sont agencées entre des liaisons électriques Li₋₁ et Li mentionnées précédemment, sur lesquelles sont disposées des diodes Di. Pour illustrer le fonctionnement de cette architecture électrique, reprenons la batterie illustrée par la figure 3 à titre d'exemple. Comme elle ne comprend que cinq modules, la paire de connecteurs S6 du support d'accueil n'est reliée à aucun potentiel. Dans cette situation, le courant provenant du potentiel haut du cinquième module, entrant dans le support d'accueil par le connecteur S5 de gauche puis conduit par la liaison électrique L5, ne peut pas traverser le sixième module en remontant par le connecteur S6 de droite, puisque ce dernier n'est pas relié à un sixième module qui n'existe pas : dans ce cas, le courant va traverser le bypass BP6 par la diode D6, pour atteindre ensuite le connecteur CP de gauche en empruntant une partie de la liaison électrique L6. Comme le potentiel entre les connecteurs S6 est nul, le bypass BP6 est automatiquement engendré. Naturellement, un même fonctionnement surviendrait s'il n'y avait que quatre modules, par un bypass par la liaison BP5, puis BP6, et ainsi de suite.

La figure 11 illustre un support d'accueil 30 selon un autre mode de réalisation de l'invention, qui peut de même être utilisé dans la batterie représentée par la figure 3. Dans cette réalisation, les liaisons de bypass gérant l'absence d'un module sont notamment modifiées, formées à l'aide d'interrupteurs Kip de bypass disposés sur les liaisons de bypass BPi en remplacement des diodes Di du mode de réalisation précédent, qui présentent l'inconvénient d'engendrer une chute de tension significative lorsqu'elles sont traversées par un courant. En variante, tout autre dispositif d'activation ou non (fermeture/ouverture) des liaisons de bypass peut être utilisé. Ces interrupteurs Kip sont pilotés par une unité de contrôle 36 interne au support d'accueil 30. Ce dernier comprend de plus un dispositif de mesure de la tension Vi entre les connecteurs de puissance Si de toutes les paires de connecteurs. L'unité de contrôle 36 détecte ainsi une tension Vi positive, nulle ou négative aux bornes d'une paire de connecteurs de puissance Si par ce dispositif de mesure de tension, ce qui lui permet de détecter automatiquement l'absence d'un module 20 dont les cellules seraient susceptibles d'être connectées sur la paire de connecteurs concernée. Suite à cette détection, l'unité de contrôle 36 commande la fermeture d'un interrupteur Ki+1p, pour former la liaison de bypass, selon le même principe que celui détaillé précédemment.

En remarque, dans le cas où un module est absent, la tension mesurée sur le connecteur de puissance Si non relié à une partie active de module est potentiellement flottante, et pourrait accidentellement correspondre à la tension d'un module et induire une erreur de diagnostic. Pour éviter une telle situation, une solution consiste à placer une résistance de rappel à un potentiel connu, par exemple le potentiel de la masse du circuit, au moment de la mesure. En variante, une autre solution pour détecter l'absence d'un module consiste à mesurer son impédance électrique.

En remarque, le support d'accueil 30 selon ce mode de réalisation comprend un second interrupteur Kis aménagé sur chaque liaison électrique Li, de même piloté par l'unité de contrôle 36. Dans une configuration dans laquelle un interrupteur Kip de bypass est ouvert et le second interrupteur Kis fermé, les différents modules 20 superposés sont liés en série, comme explicité précédemment, par l'intermédiaire des liaisons Li du support d'accueil. Toutefois, cette association des deux types d'interrupteurs Kis, Kip offre l'avantage de permettre la mise en oeuvre de différentes autres combinaisons. Notamment, si un second interrupteur Kis est ouvert et un interrupteur Kip fermé, alors le module no i de l'empilement, dont les connecteurs C de la partie active sont reliées aux connecteurs de puissance Si du support d'accueil, est isolé de l'empilement et remplacé par un court-circuit au niveau du chemin de puissance.

Cette architecture plus évoluée que celle du mode de réalisation précédent permet la mise en oeuvre d'un procédé de gestion avantageux d'une telle batterie, qui peut être piloté par l'unité de contrôle 36 qui est dotée de moyens matériel (hardware), comme au moins un calculateur et une mémoire, et des moyens logiciel (software).

Ce procédé de gestion met notamment en oeuvre une étape d'équilibrage de la tension des différents modules. Pour cela, les modules les plus chargés, détectés par la tension reçue et mesurée par l'unité de contrôle 36, sont utilisés en priorité. En effet, par le mécanisme de mise en série ou non du module avec le reste de la batterie, par le jeu des interrupteurs explicité précédemment, chaque module peut finalement être ou non utilisé à un instant donné. Il est ainsi possible d'écarter un module plus déchargé que les autres le temps nécessaire pour obtenir un rééquilibrage des tensions des modules. Les modifications de l'utilisation ou non des différents modules peuvent se faire périodiquement, selon un rapport cyclique calculé pour chaque module de manière à obtenir un équilibrage des modules de la batterie. De manière similaire, la charge de la batterie met en oeuvre une étape de charge plus importante des modules les moins chargés, par leur mise en série lors de cette phase de charge de manière prioritaire et/ou selon une durée globale plus importante que d'autres modules plus chargés.

Le procédé de gestion met aussi en oeuvre une étape d'adaptation en temps réel ou quasi temps réel de la tension de sortie de la batterie en fonction du besoin du dispositif 40 à alimenter. Pour cela, l'unité de contrôle 36 déconnecte ou non certains des modules de leur liaison série avec les autres modules.

Cette architecture permet aussi d'écarter des cellules en surchauffe ou défaillantes.

Naturellement, le support d'accueil 30 ainsi décrit peut présenter d'autres formes et architectures intérieures. Il est adapté à la connectique et à la structure des modules. Par exemple, il peut gérer une sortie triphasée à l'aide d'une structure telle que présentée par les figures 5 et 6, comme cela a été mentionné précédemment. Il peut aussi comprendre une connectique de communication, pour s'adapter à une architecture de modules et à une batterie tels que présentés par les figures 7 et 8. Ces liaisons de communication peuvent être reliées à une unité de contrôle interne, lui permettant de recevoir des mesures de capteurs, par exemple de température, tension et/ou courant, provenant de tout ou partie des modules, pour établir un diagnostic des différents modules concernés et utiliser ces données dans la gestion de leur utilisation et/ou de leur charge.

L'invention porte aussi sur un procédé de montage (conception, fabrication) d'une batterie, comprenant une étape de détermination du nombre de modules nécessaires en fonction d'une utilisation prédéterminée, puis la connexion des modules nécessaires entre eux sous la forme d'une chaîne de modules, et la connexion du premier module de la chaine de modules sur un support d'accueil. Parmi les utilisations avantageuses d'une telle batterie, il est possible de citer l'alimentation d'un engin de transport, comme une voiture, un bus, un bateau, une moto, etc., ou l'implémentation pour alimenter un matériel électroportatif, une station de base pour la téléphonie, un générateur de secours, etc.

En remarque, tout ou partie des cellules d'une batterie telle que décrite précédemment peut être associée à une source locale d'énergie, par exemple de type capteur solaire, capteur thermique, convertisseur mécanique/électrique, etc., pour profiter de cette source pour leur recharge par exemple, et/ou pour apporter des possibilités supplémentaires pour la fourniture d'énergie par la batterie. Selon une autre variante, toutes les architectures précédentes ont été décrites dans le cadre d'une batterie, mais pourraient aussi s'appliquer à un dispositif générateur d'énergie, lesdites cellules n'étant plus des cellules de stockage d'énergie mais des cellules de génération d'énergie, par exemple de type photovoltaïque, éventuellement associées à des composants de stockage d'énergie. Pour englober ces variantes de réalisation, le terme plus général de dispositif de transmission d'énergie est utilisé.

## Revendications

1. Module (20) de dispositif de transmission d'énergie comprenant au moins une cellule (21) reliée à des connecteurs de cellule (C), permettant de connecter cette au moins une cellule (21) avec des composants externes au module (20), **caractérisé en ce qu'**il comprend au moins une paire de liaisons électriques (29) de puissance indépendantes de la au moins une cellule (21) prévues pour le simple transport d'énergie au travers le module (20), chacune de ces liaisons électriques (29) de puissance étant reliée à deux connecteurs (A1, B1) du module dont un connecteur (B1) est disposé de sorte de se trouver en vis-à-vis d'un connecteur de cellule (C) d'un autre module (20) identique qui viendrait s'assembler avec ce module, en réalisant une connexion électrique entre ces deux connecteurs (B1, C).

2. Module (20) de dispositif de transmission d'énergie selon la revendication précédente, **caractérisé en ce qu'**il comprend plusieurs (n) paires de liaisons électrique (29) indépendante de la au moins une cellule (21), respectivement reliées à des premières paires de connecteurs (Ai) et à des secondes paires de connecteurs (Bi), une première seconde paire de connecteurs (B1) étant apte à une connexion électrique avec une paire de connecteurs de cellule (C) d'un module identique qui viendrait s'assembler avec ce module, les autres seconde paires de connecteurs (Bi) étant aptes à une connexion électrique avec les premières paires de connecteurs (Ai-₁) d'un module identique qui viendrait s'assembler avec ce module.

3. Module (20) de dispositif de transmission d'énergie selon l'une des revendications précédentes, **caractérisé en ce qu'**il se présente dans un format monolithique avec une enveloppe (25) au sein de laquelle sont agencés des connecteurs (C, Ai, Bi) reliés à la moins une cellule et à des liaisons (29) indépendantes des cellules.

4. Module (20) de dispositif de transmission d'énergie selon la revendication précédente, **caractérisé en ce qu'**il comprend une forme parallélépipédique, comprenant des connecteurs (Bi) agencés sur sa surface supérieure (23) et des connecteurs (Ai, C) agencés sur sa surface inférieure (22), permettant un empilement vertical de plusieurs modules (20) identiques.

5. Module (20) de dispositif de transmission d'énergie selon l'une des revendications précédentes, **caractérisé en ce qu'**il comprend des liaisons de communication (28) indépendantes, reliées à deux connecteurs (Ei, Fi) du module, permettant le simple transport d'une information de communication au travers du module (20).

6. Module (20) de dispositif de transmission d'énergie selon la revendication précédente, **caractérisé en ce qu'**il comprend au moins un capteur de mesure lié à au moins un connecteur (T) du module.

7. Module (20) de dispositif de transmission d'énergie selon l'une des revendications précédentes, **caractérisé en ce qu'**il comprend des cellules (21) reliées à des connecteurs de cellule (C) par des premières liaisons électriques (27), les liaisons électriques indépendantes (29) étant symétriquement réparties autour de ces cellules (21).

8. Dispositif de transmission d'énergie, notamment batterie ou dispositif générateur d'énergie, **caractérisé en ce qu'**il comprend au moins deux modules (20) selon l'une des revendications précédentes connectés en chaîne les uns avec les autres et un support d'accueil (30), au moins un premier module (20) étant connecté au support d'accueil (30), qui reçoit la puissance transmise par tout ou partie des cellules (21) des au moins deux modules (20), et comprend des connecteurs (CP) pour relier le dispositif de transmission d'énergie à un dispositif (40) externe à alimenter.

9. Dispositif de transmission d'énergie selon la revendication précédente, **caractérisé en ce que** le support d'accueil (30) comprend des connecteurs de puissance (Si) connectés à des connecteurs (C, Ai) d'un premier module (20), recevant la puissance des cellules (21) du premier module (20) par une première paire de connecteurs (S1), et la puissance des cellules (21) d'au moins un autre module par une autre paire de connecteurs (Si), cette puissance transitant au travers du premier module (20) par des liaisons indépendantes (29) de ce premier module (20).

10. Dispositif de transmission d'énergie selon la revendication 8 ou 10, **caractérisé en ce que** le support d'accueil (30) comprend des liaisons électriques (Li) entre ses connecteurs de puissance (Si) permettant de relier électriquement en série et/ou en parallèle tout ou partie des différents modules (20) du dispositif de transmission d'énergie.

11. Dispositif de transmission d'énergie selon l'une des revendications 8 à 10, **caractérisé en ce que** le support d'accueil (30) comprend des liaisons électriques de bypass (BPi) équipées d'un dispositif d'activation ou non, notamment une diode (Di) ou un interrupteur (Kip), permettant au dispositif de transmission d'énergie un fonctionnement même en l'absence de cellules (21) d'un module (20) reliées à au moins une paire de connecteurs de puissance (Si) du support d'accueil (30).

12. Dispositif de transmission d'énergie selon l'une des revendications 8 à 11, **caractérisé en ce que** le support d'accueil (30) comprend une unité de contrôle (36) qui coopère avec au moins l'un des composants ci-dessous :
- un dispositif de détection de présence, de défaillance ou de surchauffe d'un module (20), pour piloter l'ouverture ou non d'au moins un interrupteur (Kip) permettant de former ou non une liaison de bypass (BPi) au sein du support d'accueil (30) ;
- au moins un interrupteur (Kis) disposé sur les liaisons électriques (Li) entre les connecteurs de puissance (Si) du support d'accueil (30), pour pouvoir déconnecter ou non un module (20) du reste du dispositif de transmission d'énergie, notamment pour s'adapter au besoin en alimentation électrique d'un dispositif (40) qui serait connecté au dispositif de transmission d'énergie, ou pour l'équilibrage des modules si le dispositif de transmission d'énergie comporte un élément de stockage, comme s'il est une batterie ;
- au moins une liaison de communication pour recevoir des données de mesure provenant d'un capteur disposé au sein d'un module (20).

13. Procédé de montage d'un dispositif de transmission d'énergie, notamment une batterie, **caractérisé en ce qu'**il comprend une étape de détermination du nombre de modules (20) nécessaires en fonction d'une utilisation prédéterminée, puis la connexion des modules (20) nécessaires entre eux sous la forme d'une chaîne de modules, comprenant au moins un module selon l'une des revendications 1 à 7, et la connexion du premier module sur un support d'accueil (30).

## Patentansprüche

1. Modul (20) einer Energietransmissionsvorrichtung, umfassend mindestens eine Zelle (21), welche mit Zellverbindern (C) verbunden ist, die es ermöglichen, diese mindestens eine Zelle (21) mit Komponenten extern von dem Modul (20) zu verbinden,
**dadurch gekennzeichnet, dass** dieses mindestens ein Paar unabhängiger elektrischer Leistungsverbindungen (29) der mindestens einen Zelle (21) umfasst, die für den einfachen Energietransport quer über das Modul (20) bereitgestellt sind, wobei jede dieser elektrischen Leistungsverbindungen (29) mit zwei Verbindern (A1, B1) des Moduls verbunden ist, von denen ein Verbinder (B1) derart angeordnet ist, dass er sich gegenüber einem Zellverbinder (C) eines anderen identischen Moduls (20) befindet, das an dieses Modul angeschlossen wird, wobei eine elektrische Verbindung zwischen den beiden Verbindern (B1, C) hergestellt wird.

2. Modul (20) einer Energietransmissionsvorrichtung nach dem vorhergehenden Anspruch,
**dadurch gekennzeichnet, dass** dieses mehrere (n) Paare unabhängiger elektrischer Verbindungen (29) der mindestens einen Zelle (21) umfasst, welche jeweils mit ersten Paaren von Verbindern (Ai) und mit zweiten Paaren von Verbindern (Bi) verbunden sind, wobei ein erstes zweites Paar von Verbindern (B1) für eine elektrische Verbindung mit einem Paar von Zellverbindern (C) eines identischen Moduls geeignet ist, das an dieses Modul angeschlossen wird, wobei die anderen zweiten Paare von Verbindern (Bi) für eine elektrische Verbindung mit den ersten Paaren von Verbindern (Ai-₁) eines identischen Moduls geeignet sind, das an dieses Modul angeschlossen wird.

3. Modul (20) einer Energietransmissionsvorrichtung nach einem der vorhergehenden Ansprüche,
**dadurch gekennzeichnet, dass** sich dieses in einem monolithischen Format mit einer Hülle (25) präsentiert, in der Verbinder (C, Ai, Bi) angeordnet sind, die mit der mindestens einen Zelle und mit unabhängigen Verbindungen (29) von Zellen verbunden sind.

4. Modul (20) einer Energietransmissionsvorrichtung nach dem vorhergehenden Anspruch,
**dadurch gekennzeichnet, dass** dieses eine Parallelepiped-Form umfasst, umfassend Verbinder (Bi), die an seiner oberen Fläche (23) angeordnet sind, und Verbinder (Ai, C), die an seiner unteren Fläche (22) angeordnet sind, wobei eine vertikale Stapelung mehrerer identischer Module (20) ermöglicht wird.

5. Modul (20) einer Energietransmissionsvorrichtung nach einem der vorhergehenden Ansprüche,
**dadurch gekennzeichnet, dass** dieses unabhängige Kommunikationsverbindungen (28) umfasst, die mit zwei Verbindern (Ei, Fi) des Moduls verbunden sind, wobei der einfache Transport einer Kommunikationsinformation quer über das Modul (20) ermöglicht wird.

6. Modul (20) einer Energietransmissionsvorrichtung nach dem vorhergehenden Anspruch,
**dadurch gekennzeichnet, dass** dieses mindestens einen Messsensor umfasst, der mit mindestens einem Verbinder (T) des Moduls verbunden ist.

7. Modul (20) einer Energietransmissionsvorrichtung nach einem der vorhergehenden Ansprüche,
**dadurch gekennzeichnet, dass** dieses Zellen (21) umfasst, die mit Zellverbindern (C) durch erste elektrische Verbindungen (27) verbunden sind, wobei die unabhängigen elektrischen Verbindungen (29) symmetrisch rund um diese Zellen (21) verteilt sind.

8. Energietransmissionsvorrichtung, insbesondere eine Batterie oder Energiegeneratorvorrichtung,
**dadurch gekennzeichnet, dass** diese mindestens zwei Module (20) nach einem der vorhergehenden Ansprüche umfasst, die in einer Kette miteinander und einem Aufnahmeträger (30) verbunden sind, wobei mindestens ein erstes Modul (20) mit dem Aufnahmeträger (30) verbunden ist, der die Leistung empfängt, die von allen oder einem Teil der Zellen (21) der mindestens zwei Module (20) übertragen wird, und Verbinder (CP) umfasst, um die Energietransmissionsvorrichtung mit einer zu speisenden externen Vorrichtung (40) zu verbinden.

9. Energietransmissionsvorrichtung nach dem vorhergehenden Anspruch,
**dadurch gekennzeichnet, dass** der Aufnahmeträger (30) Leistungsverbinder (Si) umfasst, welche mit Verbindern (C, Ai) eines ersten Moduls (20) verbunden sind, die die Leistung der Zellen (21) des ersten Moduls (20) durch ein erstes Paar von Verbindern (S1) und die Leistung der Zellen (21) mindestens eines anderen Moduls durch ein anderes Paar von Verbindern (Si) empfangen, wobei diese Leistung quer über das erste Modul (20) durch unabhängige Verbindungen (29) dieses ersten Moduls (20) übertragen wird.

10. Energietransmissionsvorrichtung nach Anspruch 8 oder 10,
**dadurch gekennzeichnet, dass** der Aufnahmeträger (30) elektrische Verbindungen (Li) zwischen seinen Leistungsverbindern (Si) umfasst, die es ermöglichen, alle oder einen Teil der verschiedenen Module (20) der Energietransmissionsvorrichtung elektrisch in Serie und/oder parallel zu verbinden.

11. Energietransmissionsvorrichtung nach einem der Ansprüche 8 bis 10,
**dadurch gekennzeichnet, dass** der Aufnahmeträger (30) elektrische Bypass-Verbindungen (BPi) umfasst, die mit einer Aktivierungsvorrichtung ausgestattet sind oder nicht, insbesondere einer Diode (Di) oder einem Unterbrecher (Kip), welche einen Betrieb der Energietransmissionsvorrichtung sogar in Abwesenheit von Zellen (21) eines Moduls (20) ermöglichen, die mit mindestens einem Paar von Leistungsverbindern (Si) des Aufnahmeträgers (30) verbunden sind.

12. Energietransmissionsvorrichtung nach einem der Ansprüche 8 bis 11,
**dadurch gekennzeichnet, dass** der Aufnahmeträger (30) eine Steuereinheit (36) umfasst, die mit mindestens einer der nachstehenden Komponenten zusammenwirkt:
- einer Vorrichtung zur Detektion der Anwesenheit, des Ausfalls oder der Überhitzung eines Moduls (20), um die Öffnung mindestens eines Unterbrechers (Kip) zu steuern oder nicht, wobei es ermöglicht wird, eine Bypass-Verbindung (BPi) in dem Aufnahmeträger (30) zu bilden oder nicht;
- mindestens einem Unterbrecher (Kis), der an den elektrischen Verbindungen (Li) zwischen den Leistungsverbindern (Si) des Aufnahmeträgers (30) angeordnet ist, um ein Modul (20) von dem Rest der Energietransmissionsvorrichtung trennen zu können oder nicht, insbesondere um sich an den elektrischen Versorgungsbedarf einer Vorrichtung (40) anzupassen, die mit der Energietransmissionsvorrichtung verbunden wird, oder für den Ausgleich der Module, wenn die Energietransmissionsvorrichtung ein Speicherelement umfasst, wie wenn sie eine Batterie ist;
- mindestens einer Kommunikationsverbindung, um Messdaten zu empfangen, die von einem Sensor stammen, der in einem Modul (20) angeordnet ist.

13. Verfahren zur Montage einer Energietransmissionsvorrichtung, insbesondere einer Batterie,
**dadurch gekennzeichnet, dass** dieses einen Schritt der Bestimmung der Anzahl von Modulen (20) umfasst, die als Funktion einer vorherbestimmten Verwendung notwendig sind, anschließend der Verbindung der Module (20), die untereinander notwendig sind, in der Form einer Kette von Modulen, umfassend mindestens ein Modul nach einem der Ansprüche 1 bis 7, und der Verbindung des ersten Moduls mit einem Aufnahmeträger (30).

## Claims

1. Energy transmission device module (20) comprising at least one cell (21) connected to cell connectors (C), allowing this at least one cell (21) to be connected to components that are external to the module (20), **characterized in that** it comprises at least one pair of independent electrical power links (29) of the at least one cell (21) that are provided for simple energy transport through the module (20), each of these electrical power links (29) being connected to two connectors (A1, B1) of the module, of which one connector (B1) is arranged so as to be opposite a cell connector (C) of another identical module (20) that would be assembled with this module, by making an electrical connection between these two connectors (B1, C).

2. Energy transmission device module (20) according to the preceding claim, **characterized in that** it comprises a plurality (n) of pairs of independent electrical links (29) of the at least one cell (21), which are respectively connected to first pairs of connectors (Ai) and to second pairs of connectors (Bi), a first second pair of connectors (B1) being capable of electrical connection to a pair of cell connectors (C) of an identical module that would be assembled with this module, the other second pairs of connectors (Bi) being capable of electrical connection to the first pairs of connectors (Ai-₁) of an identical module that would be assembled with this module.

3. Energy transmission device module (20) according to either of the preceding claims, **characterized in that** it appears in a monolithic format with a casing (25) within which there are arranged connectors (C, Ai, Bi) connected to the at least one cell and to independent links (29) of the cells.

4. Energy transmission device module (20) according to the preceding claim, **characterized in that** it comprises a parallelepipedal form, comprising connectors (Bi) arranged on its upper surface (23) and connectors (Ai, C) arranged on its lower surface (22), allowing a vertical stack of a plurality of identical modules (20).

5. Energy transmission device module (20) according to one of the preceding claims, **characterized in that** it comprises independent communication links (28), connected to two connectors (Ei, Fi) of the module, allowing simple transport of a piece of communication information through the module (20).

6. Energy transmission device module (20) according to the preceding claim, **characterized in that** it comprises at least one measurement sensor linked to at least one connector (T) of the module.

7. Energy transmission device module (20) according to one of the preceding claims, **characterized in that** it comprises cells (21) connected to cell connectors (C) by first electrical links (27), the independent electrical links (29) being symmetrically distributed around these cells (21).

8. Energy transmission device, notably a battery or an energy generating device, **characterized in that** it comprises at least two modules (20) according to one of the preceding claims that are connected to one another in a chain and a host support (30), at least one first module (20) being connected to the host support (30), which receives the power transmitted by all or some of the cells (21) of the at least two modules (20), and comprises connectors (CP) for connecting the energy transmission device to an external device (40) that is to be supplied with power.

9. Energy transmission device according to the preceding claim, **characterized in that** the host support (30) comprises power connectors (Si) connected to connectors (C, Ai) of a first module (20), receiving the power from the cells (21) of the first module (20) through a first pair of connectors (S1), and the power from the cells (21) of at least one other module through another pair of connectors (Si), this power transiting through the first module (20) by independent links (29) of this first module (20).

10. Energy transmission device according to Claim 8 or 10, **characterized in that** the host support (30) comprises electrical links (Li) between its power connectors (Si) allowing electrical series and/or parallel connection of all or some of the various modules (20) of the energy transmission device.

11. Energy transmission device according to one of Claims 8 to 10, **characterized in that** the host support (30) comprises electrical bypass links (BPi) that may or may not be equipped with an activation device, notably a diode (Di) or a switch (Kip), allowing the energy transmission device to operate even in the absence of cells (21) of a module (20) that are connected to at least one pair of power connectors (Si) of the host support (30).

12. Energy transmission device according to one of Claims 8 to 11, **characterized in that** the host support (30) comprises a control unit (36) that cooperates with at least one of the components below:
- a device for detecting presence, failure or overheating in a module (20), in order to control the opening or non-opening of at least one switch (Kip) allowing formation or non-formation of a bypass link (BPi) within the host support (30);
- at least one switch (Kis) arranged on the electrical links (Li) between the power connectors (Si) of the host support (30), in order to be able to disconnect or not disconnect a module (20) from the rest of the energy transmission device, notably in order to meet the need for a supply of electric power for a device (40) that would be connected to the energy transmission device, or in order to balance modules if the energy transmission device has a storage element, as if it is a battery;
- at least one communication link in order to receive measurement data from a sensor arranged within a module (20).

13. Method for assembling an energy transmission device, notably a battery, **characterized in that** it comprises a step of determination of the number of modules (20) that are necessary according to a predetermined use, then connection of the necessary modules (20) to one another in the form of a chain of modules, comprising at least one module according to one of Claims 1 to 7, and connection of the first module to a host support (30).
